# EUROPEAN PATENT SPECIFICATION

(11) **EP 3 605 958 B1**
(45) Date of publication and mention of the grant of the patent: **22.09.2021**
(21) Application number: 18306053.2
(22) Date of filing: 02.08.2018
(51) Int. Cl.: H04L 12/46

(54) **IP ROUTED VIRTUAL PRIVATE LAN**
VIRTUAL PRIVATE LAN MIT IP ROUTING
VIRTUAL PRIVATE LAN AVEC ROUTAGE IP

(43) Date of publication of application: 05.02.2020
(73) Proprietor: Nokia Solutions and Networks Oy, 02610 Espoo (FI)
(72) Inventor: BEN HOUIDI, Zied, 92320 CHATILLON (FR); GALLO, Massimo, 92130 ISSY LES MOULINEAUX (FR)
(74) Representative: Loyer & Abello

(56) References cited:
- WO-A1-2009/086931
- WO-A2-2008/063858
- US-A1- 2008 170 578
- US-B1- 9 100 201

## Description

### TECHNICAL FIELD

Various exemplary embodiments disclosed herein relate generally to internet protocol (IP) routed virtual private local area networks (LANs).

### BACKGROUND

An enterprise network often has sites in distant locations that need to interconnect. Instead of building its own interconnection infrastructure, an enterprise may rely on a virtual private network (VPN) service provider that shares its infrastructure among different enterprises, thus reducing the connection costs for each single company. The main task of such a VPN service provider is hence to multiplex different networks on its infrastructure while ensuring isolation between the different multiplexed networks; this is shown in document WO 2009/086931 A1.

### SUMMARY

A summary of various exemplary embodiments is presented below. Some simplifications and omissions may be made in the following summary, which is intended to highlight and introduce some aspects of the various exemplary embodiments, but not to limit the scope of the invention. Detailed descriptions of an exemplary embodiment adequate to allow those of ordinary skill in the art to make and use the inventive concepts will follow in later sections.

Various embodiments relate to a method of implementing a virtual private network (VPN) at a provider edge network node, including: receiving a data packet from a customer edge network node that includes layer-2 header information including a destination MAC address and a source MAC address; encapsulating the data packet, including layer-3 and layer-2 headers in another data packet; selecting a provider interface based upon the destination IP address, when the data packet has a destination IP address; selecting multiple provider interfaces that belong to the VPN, when the data packet has no destination IP address; and transmitting the encapsulated data packet to the selected provider interface(s).

Various embodiments are described, further including: determining that the provider edge network node received an address resolution protocol (ARP) request message; broadcasting an ARP request message requesting the destination IP address associated with the destination MAC address; and receiving an ARP response message including the IP address associated with the destination MAC address.

Various embodiments are described, wherein the ARP response message is received from the destination network node.

Various embodiments are described, wherein the ARP response message is received from a first ARP request handler.

Various embodiments are described, wherein the first ARP response handler receives the ARP response message from a second ARP response handler.

Various embodiments are described, wherein the ARP request message is sent to a first ARP response handler that broadcasts the ARP request message to a second ARP response handler.

Various embodiments are described, wherein the ARP request message is sent to a first ARP response handler that transmits the ARP request message to a centralized resolution system and the first ARP response handler receives the ARP response message from the centralized resolution system.

Various embodiments are described, wherein the selected provider interface(s) connects to a layer-3 VPN.

Further various embodiments relate to a provider edge network node connected to a virtual private network (VPN), including: a memory device; and a processor in communication with the memory device, the processor being configured to: receive a data packet from a customer edge network node that includes layer-2 header information including a destination MAC address and a source MAC address; encapsulate the data packet, including layer-3 and layer-2 headers in another data packet; select a provider interface based upon the destination IP address, when the data packet has a destination IP address; select multiple provider interfaces that belong to the VPN, when the data packet has no destination IP address; and transmit the encapsulated data packet to the selected provider interface(s).

Various embodiments are described, wherein the processor is further configured to: determine that the provider edge network node received an address resolution protocol (ARP) request message; broadcast an ARP request message requesting the destination IP address associated with the destination MAC address; and receive an ARP response message including the IP address associated with the destination MAC address.

Various embodiments are described, wherein the ARP response message is received from the destination network node.

Various embodiments are described, wherein the ARP response message is received from a first ARP request handler.

Various embodiments are described, wherein the first ARP response handler receives the ARP response message from a second ARP response handler.

Various embodiments are described, wherein the ARP request message is sent to a first ARP response handler that broadcasts the ARP request message to a second ARP response handler.

Various embodiments are described, wherein the ARP request message is sent to a first ARP response handler that transmits the ARP request message to a centralized resolution system and the first ARP response handler receives the ARP response message from the centralized resolution system.

Various embodiments are described, wherein the selected provider interface(s) connects to a layer-3 VPN.

Further various embodiments relate to a method of handling address resolution protocol (ARP) messages at an ARP response handler, including: receiving an address resolution protocol (ARP) request message requesting the destination IP address associated with the destination MAC address from a provider edge network node; broadcasting the ARP request message to a plurality of other ARP response handlers; receiving an ARP response message including the IP address associated with the destination MAC address from one of the plurality of other ARP response handlers; and transmitting the received ARP response message to the provider edge network node, wherein the ARP response handler includes routing data regarding the plurality of other ARP response handlers.

Further various embodiments relate to a method of handling address resolution protocol (ARP) messages at an ARP response handler, including: receiving an address resolution protocol (ARP) request message requesting the destination IP address associated with the destination MAC address from a provider edge network node; transmitting the ARP request message to a centralized resolution system; receiving an ARP response message including the IP address associated with the destination MAC address from centralized resolution system; and transmitting the received ARP response message to the provider edge network node.

Further various embodiments relate to a provider edge network node for implementing a virtual private network (VPN), including: means for receiving a data packet from a customer edge network node that includes layer-2 header information including a destination MAC address and a source MAC address; means for encapsulating the data packet, including layer-3 and layer-2 headers in another data packet; means for selecting a provider interface based upon the destination IP address, when the data packet has a destination IP address; means for selecting multiple provider interfaces that belong to the VPN, when the data packet has no destination IP address; and means for transmitting the encapsulated data packet to the selected provider interface(s).

Various embodiments are described, further including: means for determining that the provider edge network node received an address resolution protocol (ARP) request message; means for broadcasting an ARP request message requesting the destination IP address associated with the destination MAC address; and means for receiving an ARP response message including the IP address associated with the destination MAC address.

Further various embodiments relate to an ARP response handler for handling address resolution protocol (ARP) messages at, including: means for receiving an address resolution protocol (ARP) request message requesting the destination IP address associated with the destination MAC address from a provider edge network node; means for broadcasting the ARP request message to a plurality of other ARP response handlers; means for receiving an ARP response message including the IP address associated with the destination MAC address from one of the plurality of other ARP response handlers; and means for transmitting the received ARP response message to the provider edge network node, wherein the ARP response handler includes routing data regarding the plurality of other ARP response handlers.

Further various embodiments relate to an ARP response handler for handling address resolution protocol (ARP) messages at, including: means for receiving an address resolution protocol (ARP) request message requesting the destination IP address associated with the destination MAC address from a provider edge network node; means for transmitting the ARP request message to a centralized resolution system; means for receiving an ARP response message including the IP address associated with the destination MAC address from centralized resolution system; and means for transmitting the received ARP response message to the provider edge network node.

### BRIEF DESCRIPTION OF THE DRAWINGS

In order to better understand various exemplary embodiments, reference is made to the accompanying drawings, wherein:
FIG. 1 illustrates a layer-3 VPN;
FIG. 2 illustrates a layer-2 VPN;
FIG. 3 illustrates an embodiment of a hybrid layer-2/layer-3 VPN network; and
FIG. 4 illustrates an exemplary hardware diagram for implementing any of the customer edge, provider edge, address resolution protocol request handlers, or central resolutions systems.

To facilitate understanding, identical reference numerals have been used to designate elements having substantially the same or similar structure and/or substantially the same or similar function.

### DETAILED DESCRIPTION

The description and drawings illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art and are to be construed as being without limitation to such specifically recited examples and conditions. Additionally, the term, "or," as used herein, refers to a non-exclusive or (*i.e.,* and/or), unless otherwise indicated (*e.g.,* "or else" or "or in the alternative"). Also, the various embodiments described herein are not necessarily mutually exclusive, as some embodiments can be combined with one or more other embodiments to form new embodiments.

There are roughly three ways to interconnect two networks. The first is to provide a physical connection between the two networks. The second is to connect the two networks through layer-2 equipment like a hub or a switch. The third is to interconnect the two networks through an IP router. These three interconnection types define the three main families of provider provisioned VPNs. First, in layer-1 VPNs, the VPN provider supplies or emulates a physical link (*e.g.,* a circuit) between any pair of networks that its customer needs to interconnect. Second, in layer-2 VPNs, the provider supplies a layer-2 connection: for the special case of Ethernet for example, the provider acts as a switch that interconnects the networks of the same enterprise. Finally, in layer-3 IP VPNs, the provider acts as a router to interconnect networks of the same enterprise. Roughly speaking, in layer-3, 2, and 1 VPNs, the shared infrastructure acts as a router, a switch, and a physical link, respectively.

There is no best solution between layer-3, layer-2 and layer-1 VPNs, when it comes to provider provisioned VPNs. The best solution depends on the requirements of the enterprise. For instance, an enterprise which needs to have control on its layer-2 communications may opt for a layer-2 VPN. An Enterprise which does not have this constraint may simply opt for the simpler solution of using Layer-3 VPNs. Layer-3 VPNs are in fact simpler than their Layer-2 counterparts.

Embodiments described herein are at the boundaries between layer-2 and layer-3 VPNs and, their operation will be described as follows.

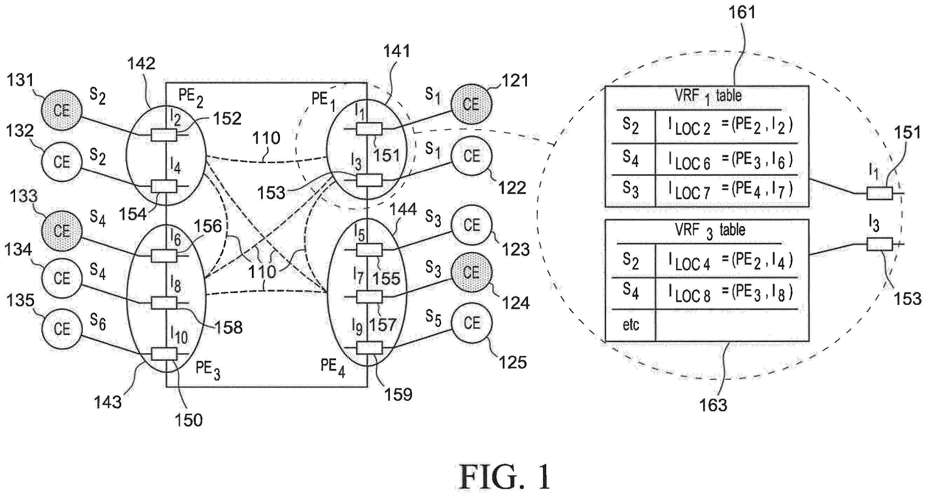

FIG. 1 illustrates a layer-3 VPN. In layer-3 VPNs, a VPN site has a Customer Edge (CE) router that aggregates its traffic, and the provider network has a set of provider edge (PE) routers 141-144 that connect the different enterprise CE routers 121-125 and 131-135. Each site has one (or more) IP prefix(es), denoted Sᵢ in FIG. 1, that address the VPN site network. Each PE router 141-144 has a set of physical (or virtual) interfaces 150-159, where each physical interface 150-159 connects a VPN customer site. Border gateway control/multiprotocol label switching (BGP/MPLS) IP VPNs are the widely used layer-3 (L3) VPN standard, and various BGP sessions 110 are shown connecting the different PEs.

A PE associates by configuration a virtual routing and forwarding (VRF) table 161 and 163 per interface 151 and 153. The VRF table contains the routing information (destination IP, tunnel ID for the exit interface associated with the destination IP) necessary for VPN routing. FIG. 1 provides an example of PE configuration for PE1 141 and shows the content of VRF₁ table 161 and VRF₃ table 163, corresponding respectively to provider interfaces I1 151 and 13 153. Note that the exit tunnel ID has two components: one that globally identifies the egress PE, and one that locally identifies the egress interface within the egress PE.

In BGP MPLS VPNs, VRFs are populated with the right routing information using an extension of the BGP protocol: the mapping (site IP, PE address or label, interface label) relative to a VPN interface is encoded in a BGP route and flooded to populate distant VRFs of the same VPN.

In BGP MPLS VPNs, when a packet arrives from an ingress interface of the provider network, the destination IP is looked up in the VRF, and the packet is then tunneled to the correct interface exit based upon the destination IP. Only headers up to layer-3 (*i.e.,* IP source, destination) are however encapsulated inside the tunnel. This means that the distant CE that will receive the packet will see, in layer-2 information if it is Ethernet, the source MAC address of the PE's interface that removed the message from the tunnel.

International patent application WO 2009/086931 introduces enhancements to VRF table advertising and updating in a layer-3 VPN.

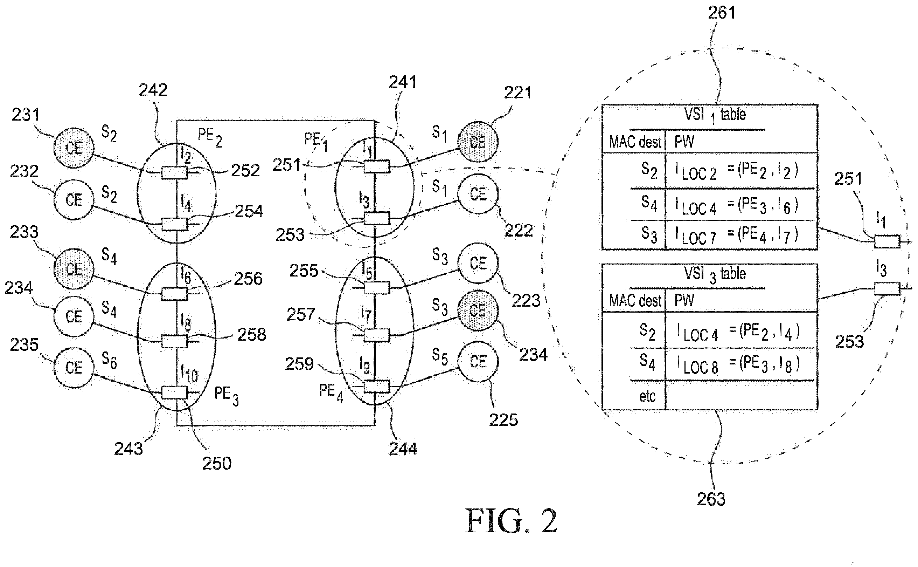

FIG. 2 illustrates a layer-2 VPN. As illustrated in FIG. 2, in layer-2 VPNs, similar to layer-3 VPNs, the provider backbone has a set of PE routers 221-225 and 231-235. Each PE has a set of interfaces 250-259 that connect customer sites. The difference with respect to layer-3 VPN is that PE routers 221-225 and 231-235 choose the appropriate tunnel using their destination layer-2 address (*e.g.,* MAC) and that they encapsulate the packet up to layer-2 headers.

One of the most popular layer-2 VPN solutions is virtual private LAN service (VPLS), a point-to-multipoint layer-2 Ethernet VPN service that emulates a LAN.

In VPLS, each interface has a virtual switching instance (VSI) table 261 and 263, which is a table that contains mappings between destination MAC addresses (or any other layer-2 identifier) and the corresponding destination exit interface locators (PWs) to which the traffic should be forwarded. In the classical VPLS standard, the mappings are not explicitly distributed as with BGP MPLS VPNs. Instead, each VSI acts as a layer-2 switch and performs MAC learning to associate site IDs (*i.e.,* MAC addresses) to the corresponding interface locators (PWs).

In theory, the distribution of MAC destination and tunnel ID/exit interface may be done explicitly, exactly the same way as with BGP MPLS VPNs, by encoding destination MAC/VLAN and exit interface info in BGP routes. However as discussed later in this disclosure, this is complex to implement as it requires PE routers to perform MAC based routing. This is the purpose of a recent IETF standard (see A. Sajassi, R. Aggarwal, N. Bitar, A. Isaac, J. Uttaro, J. Drake, and W. Henderickx. BGP MPLS-Based Ethernet VPN. RFC 7432, Feb 2015).

In VPLS, when a packet arrives from an ingress interface of the provider network, the destination MAC address is looked up in the VSI table, and the packet is then tunneled to the right interface exit. All headers up to layer-2 (including (MAC source, MAC destination)) are encapsulated inside the tunnel. By doing so, the distant CE which will receive the packet will see the source MAC address of the sender: *i.e.,* as if the source and destination were in the same LAN.

One of the problems of layer-2 Ethernet VPNs is that they need advanced functionalities from PE routers. First, PE routers need to be able to perform MAC/Layer-2-based routing (make lookups based on layer-2 information). PE routers need also to employ complex techniques to keep the MAC tables up to date. For instance, in the case of VPLS, this is done by continuously performing MAC learning to update a mapping between MAC destination addresses and the corresponding tunnels on which to forward traffic. Ethernet VPN tries to solve this problem differently: the mapping between MAC addresses and ingress points/tunnels is piggy-backed in BGP routing information and used by distant sites to populate VSI tables.

Thus, in the current situation, simpler or legacy PE routers cannot support the complex operations necessary to implement layer-2 VPNs. Embodiments providing a simple workaround to this issue will now be described.

Ethernet VPN, a solution briefly discussed earlier, is one approach to simplify the MAC learning procedure in VPLS layer-2 VPNs. One of the drawbacks of VPLS is MAC learning and the maintenance cost of VSI tables and their frequent update/refresh *etc.* Ethernet VPN proposes to explicitly populate VSI tables by using a protocol like BGP. Similar to BGP MPLS VPNs, instead of sending (destination IP, Exit tunnel info) in the BGP routes, the protocol will signal (destination layer-2 (*e.g.,* MAC) info, tunnel ID) in the BGP routes so that each VSI table has the right layer-2 information for routing. However, in this case, PE routers would still need to be able to route every packet according to its MAC address, a capability that it is not necessarily available for all routers.

Embodiments will now be described that provide layer-2 VPN service between two or more customer's networks connected to the provider's network with PEs. Classical layer-2 VPNs such as virtual private LAN service (VPLS) or Ethernet VPN use layer-2 addresses to lookup the encapsulation tunnel to which the packet will be forwarded. The problem with such solutions is that PE needs to perform advanced functionalities that are sophisticated and complex to implement.

The embodiments described below is a hybrid between layer-3 and layer-2 VPNs that implements a layer-2 VPN service with a modification to legacy layer-3 PE routers. The key idea of these embodiments is to bypass MAC/layer-2 tunnel binding to avoid the implementation of complex operations at PEs. In particular, the embodiments use layer-3 information (destination IPs) instead of layer-2 header information for routing. As such PE routers will have VRFs like in BGP MPLS VPNs instead of VSIs. The only required change is the header to be copied/encapsulated. In BGP MPLS VPNs, all information up to layer-3 is encapsulated. In the embodiments described herein however, the PE needs only to encapsulate the layer-2 information *(e.g.,* MAC source and MAC destination) in addition to layer-3 and above. The rationale behind this (*e.g.,* MAC source and MAC destination) in addition to layer-3 and above. The rationale behind this idea is that the communication in LANs is still mainly based on IP addresses and that MAC based routing is not necessary to route the packets to their correct destination. Similar to layer-3 VPNs, the VRF tables are populated by a protocol like BGP. In this case, unlike in VPLS, the CEs (or virtual appliances doing the same role added on the CE site) need to signal their IP prefixes to the PEs to which they are attached.

The embodiments also include a method for MAC/layer-2 address resolution across different customer's networks. This method is needed because, unlike in classical layer-2 VPNs where address resolution protocol (ARP) messages are forwarded using link layer information, the PE routers do not perform link layer information-based routing.

To establish layer-2 communication between two remote end-points connected to two different PEs, the destination network layer-3 address is used to discover the destination layer-2 address *i.e.,* using ARP. Different ways to intercept and manipulate ARP messages so that cross-location layer-2 address resolution is enabled will be described. Finally, once the destination layer-2 address is resolved, if the machine that the packet is directed to is in a remote location, the PE encapsulates the packet in a tunnel. The tunnel ID resolution (knowing inside which tunnel to encapsulate traffic) is done by using the destination layer-3 address and the VRF table, similar to what happens in layer-3 VPNs. Different to what happens in layer-3 VPNs, the layer-2 VPN enabled PE encapsulates the packet including its layer-2 header.

To implement a layer-2 VPN using existing layer-3 VPN equipment two elements are introduced. The first element is a cross-location layer-2 address resolution which includes a method for matching destination IP/layer-3 and MAC/layer-2 addresses across different customer's networks *i.e.,* a method for using ARP across different locations. The second element includes instructing layer-3 VPN PEs to include the layer-2 headers of packets when they are tunneled.

To implement the cross-location link layer address resolution the ARP currently used in LANs may be used.

The first embodiment results in extra ARP messages (mainly extra duplicated responses) flowing in the network. In this first embodiment, the PE router carries out the following operations. Every packet that does not have layer-3 information (*e.g.,* destination IP addresses, *etc.*) is flooded into all the tunnels to which the VRF is connected. The lack of the destination IP address is indicative of a layer-2 message that needs to be broadcast (e.g. an ARP message).

This is like adding a default route and action to the PE router. By doing such a flooding, all ARP messages are forwarded to the right destination machines in the same VPN. ARP responses which are sent in unicast are flooded to all the VPN sites to reach the original ARP request sender. The network overhead due to this ARP message flooding is reasonable in comparison to the volume of data traffic carried in the network. Mac-IP address bindings are cached in local ARP tables (each device connected to the LAN has one, e.g., computers, switches, etc.) for a very long time e.g., minutes after an ARP entry is not used, it is removed.

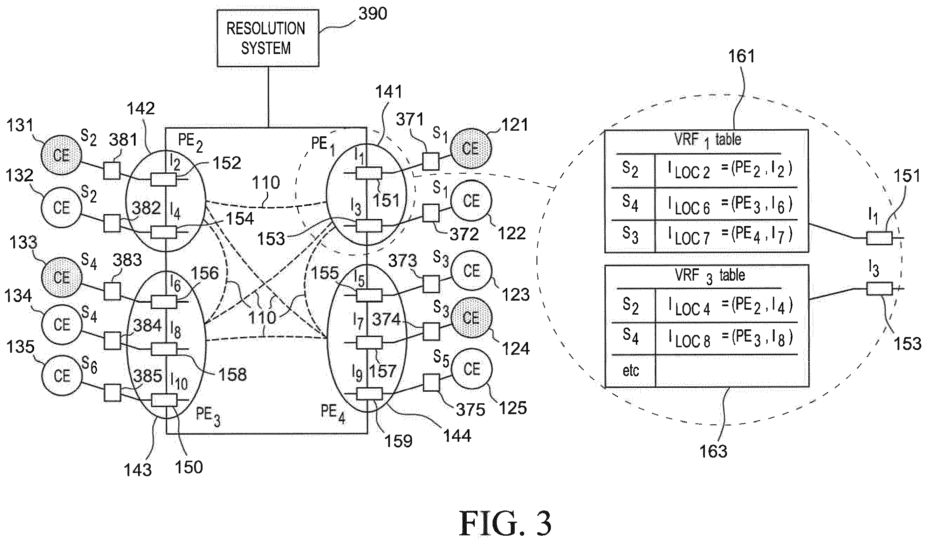

In a second embodiment, new equipment *i.e.,* an ARP request handler, may be installed implementing the methods required to adapt ARP to work across different locations. FIG. 3 illustrates an embodiment of a hybrid layer-2/layer-3 VPN network. These ARP request handlers 371-375 and 381-385 are located inside customer's networks between CE and PE. As such, this equipment intercepts the traffic directed to and coming from PEs. The MAC/layer-2 address resolution method has at least two different technical implementations. This second embodiment avoids the flooding of ARP replies.

In a first implementation of this second embodiment, at system set-up, ARP request handlers 371-375 and 381-385 belonging to different network locations connected through the same layer-2 VPN are configured to know each other's IP/layer-3 address. ARP requests that need to be forwarded to a remote location are then intercepted by the ARP request handler and encapsulated in N unicast messages directed to remote ARP request handlers. Receiving ARP request handlers inspect the message to record the ARP request handler from which the ARP request is coming from and then forward the ARP request, in broadcast, to the CE it is attached to. When the machine that corresponds to the requested IP/layer-3 responds with an ARP response, the message is intercepted by the local ARP request handler and forwarded back to the requesting ARP request handler. When the ARP response is finally received by the ARP request handler responsible of the network from which the request was originated, the ARP response is delivered to the sender of the ARP request hence completing the MAC/layer-2 address resolution.

In a second implementation, at system set-up, ARP request handlers 371-375 and 381-385 are configured to be connected to a centralized resolution system 390 that is responsible for MAC/layer-2 to IP/layer-2 address binding. In this case, each time a new machine is installed in the network (or each time a machine changes its network address), the new machine (or changing machine) needs to send an ARP announcement (or gratuitous ARP) to establish the binding between IP/layer-3 and MAC/layer-2 addresses. Such a message is broadcasted to the local CE and intercepted by the ARP request handler when transmitted towards the PE. To announce the binding to other remote network locations, the message is forwarded to the centralized resolution system that maintains IP/layer-3 and MAC/layer-2 address binding for one (or multiple) layer-2 VPNs. When an ARP request is intercepted by the ARP request handler, the ARP request is forwarded to the centralized resolution system that, when possible and available, sends back the appropriate ARP response completing the MAC/layer-2 address resolution. If the central resolution system 390 does not have the requested mapping, it may send out a broadcast ARP message to determine the mapping, or the central resolution system 390 may send a message back to the requesting ARP request handler which then sends out a broadcast ARP request as described above.

To enable the encapsulation of layer-2 packets in layer-3 VPN enabled PEs, a simple modification may easily be deployed through a PE software upgrade. Such modification may include a method for recognizing layer-2 headers and preserving them while encapsulating the packet in the tunnel. That is the source and destination MAC addresses are preserved and encapsulated in the packet.

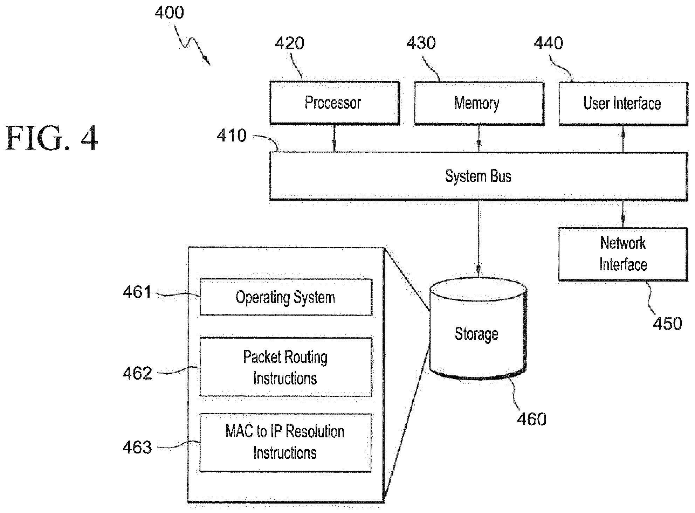

FIG. 4 illustrates an exemplary hardware diagram 400 for implementing any of the CE, PE, ARP request handlers, or central resolutions systems described above. As shown, the device 400 includes a processor 420, memory 430, user interface 440, network interface 450, and storage 460 interconnected via one or more system buses 410. It will be understood that FIG. 4 constitutes, in some respects, an abstraction and that the actual organization of the components of the device 400 may be more complex than illustrated.

The processor 420 may be any hardware device capable of executing instructions stored in memory 430 or storage 460 or otherwise processing data. As such, the processor may include a microprocessor, field programmable gate array (FPGA), application-specific integrated circuit (ASIC), or other similar devices.

The memory 430 may include various memories such as, for example L1, L2, or L3 cache or system memory. As such, the memory 430 may include static random-access memory (SRAM), dynamic RAM (DRAM), flash memory, read only memory (ROM), or other similar memory devices.

The user interface 440 may include one or more devices for enabling communication with a user such as an administrator. For example, the user interface 440 may include a display, a mouse, and a keyboard for receiving user commands. In some embodiments, the user interface 440 may include a command line interface or graphical user interface that may be presented to a remote terminal via the network interface 450. In some embodiments, no user interface may be present.

The network interface 450 may include one or more devices for enabling communication with other hardware devices. For example, the network interface 450 may include a network interface card (NIC) configured to communicate according to the Ethernet protocol. Additionally, the network interface 450 may implement a TCP/IP stack for communication according to the TCP/IP protocols. Various alternative or additional hardware or configurations for the network interface 450 will be apparent.

The storage 460 may include one or more machine-readable storage media such as read-only memory (ROM), random-access memory (RAM), magnetic disk storage media, optical storage media, flash-memory devices, or similar storage media. In various embodiments, the storage 460 may store instructions for execution by the processor 420 or data upon with the processor 420 may operate. For example, the storage 460 may store a base operating system 461 for controlling various basic operations of the hardware 400. Further, software for routing packets 462 for the CE, PE, and ARP request handler that implement the methods and steps described above, may be stored in the memory. In the case of the central resolutions system, software for performing MAC to IP resolution 463 may be stored in the memory. This software may implement the various embodiments described above.

It will be apparent that various information described as stored in the storage 460 may be additionally or alternatively stored in the memory 430. In this respect, the memory 430 may also be considered to constitute a "storage device" and the storage 460 may be considered a "memory." Various other arrangements will be apparent. Further, the memory 430 and storage 460 may both be considered to be "non-transitory machine-readable media." As used herein, the term "non-transitory" will be understood to exclude transitory signals but to include all forms of storage, including both volatile and non-volatile memories.

While the host device 400 is shown as including one of each described component, the various components may be duplicated in various embodiments. For example, the processor 420 may include multiple microprocessors that are configured to independently execute the methods described herein or are configured to perform steps or subroutines of the methods described herein such that the multiple processors cooperate to achieve the functionality described herein. Further, where the device 400 is implemented in a cloud computing system, the various hardware components may belong to separate physical systems. For example, the processor 420 may include a first processor in a first server and a second processor in a second server.

The embodiments described in FIG. 4 may also be implemented completely in hardware or a combination of both hardware and software.

Various features of the embodiments described above result in a technological improvement and advancement over existing VPN systems. Such features include, using existing layer-3 PEs to implement a layer-2 VPNs using a hybrid approach.

Further such embodiments may be implemented on multiprocessor computer systems, distributed computer systems, and cloud computing systems.

Any combination of specific software running on a processor to implement the embodiments of the invention, constitute a specific dedicated machine.

As used herein, the term "non-transitory machine-readable storage medium" will be understood to exclude a transitory propagation signal but to include all forms of volatile and non-volatile memory.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be affected while remaining within the scope of the invention. Accordingly, the foregoing disclosure, description, and figures are for illustrative purposes only and do not in any way limit the invention, which is defined only by the claims.

## Claims

1. A method of implementing a virtual private network, VPN, at a provider edge network node, comprising:
receiving a first data packet from a customer edge network node that includes layer-2 header information including a remote destination MAC address and a source MAC address;
determining that the provider edge network node received an address resolution protocol, ARP, request message;
selecting multiple provider interfaces that belong to the VPN, when the first data packet has no destination IP address;
broadcasting the ARP request message requesting a destination IP address associated with the remote destination MAC address;
receiving an ARP response message including the IP address associated with the remote destination MAC address encapsulating the first data packet, including layer-3 and layer-2 headers in a second data packet; selecting a provider interface based upon the destination IP address, which is either the destination IP address of the first of the first data packet when the first data packet has a destination IP address or the destination IP address contained in the ARP response message ; and
transmitting the encapsulated second data packet to the selected provider interface.

2. The method of claim 1, wherein the ARP response message is received from the destination network node.

3. The method of claim 1, wherein the ARP response message is received from a first ARP request handler.

4. The method of claim 3, wherein the first ARP response handler receives the ARP response message from a second ARP response handler.

5. The method of claim 1, wherein the ARP request message is sent to a first ARP response handler that broadcasts the ARP request message to a second ARP response handler.

6. The method of claim 1, wherein the ARP request message is sent to a first ARP response handler that transmits the ARP request message to a centralized resolution system and the first ARP response handler receives the ARP response message from the centralized resolution system.

7. The method of claim of any of claims 1 to 6, wherein the selected provider interface(s) connects to a layer-3 VPN.

8. A provider edge network node connected to a virtual private network, VPN, comprising:
a memory device; and
a processor in communication with the memory device, the processor being configured to:
receive a first data packet from a customer edge network node that includes layer-2 header information including a remote destination MAC address and a source MAC address;
determine that the provider edge network node received an address resolution protocol, ARP, request message;
select multiple provider interfaces that belong to the VPN, when the first data packet has no destination IP address;
broadcast the ARP request message requesting the destination IP address associated with the remote destination MAC address;
receive an ARP response message including the IP address associated with the remote destination MAC address;
encapsulate the first data packet, including layer-3 and layer-2 headers in a second data packet;
select a provider interface based upon the destination IP address, which is either the destination IP address of the first data packet when the first data packet has a destination IP address or the destination IP address contained in the ARP response message; and
transmit the encapsulated second data packet to the selected provider interface.

9. The provider edge network node of claim 8, wherein the ARP response message is received from the destination network node.

10. The provider edge network node of claim 8, wherein the ARP response message is received from a first ARP request handler.

11. The provider edge network node of claim 10, wherein the first ARP response handler receives the ARP response message from a second ARP response handler.

12. The provider edge network node of claim 8, wherein the ARP request message is sent to a first ARP response handler that broadcasts the ARP request message to a second ARP response handler.

13. The provider edge network node of claim 8, wherein the ARP request message is sent to a first ARP response handler that transmits the ARP request message to a centralized resolution system and the first ARP response handler receives the ARP response message from the centralized resolution system.

14. The provider edge network node of any of claims 9 to 13, wherein the selected provider interface(s) connects to a layer-3 VPN.

## Patentansprüche

1. Verfahren zum Implementieren eines virtuellen privaten Netzwerks, VPN, an einem Anbieterrandnetzwerkknoten, das Folgendes umfasst:
Empfangen eines ersten Datenpakets von einem Kundenrandnetzwerkknoten, das Schicht-2-Headerinformationen beinhaltet, die eine entfernte MAC-Zieladresse und eine MAC-Quelladresse beinhalten;
Bestimmen, dass der Anbieterrandnetzwerkknoten eine Adressauflösungsprotokoll(ARP)-Anforderungsnachricht empfangen hat;
Auswählen von mehreren Anbieterschnittstellen, die zum VPN gehören, wenn das erste Datenpaket keine IP-Zieladresse aufweist;
Rundsenden der ARP-Anforderungsnachricht, um eine IP-Zieladresse, die mit der entfernten MAC-Zieladresse verknüpft ist, anzufordern;
Empfangen einer ARP-Antwortnachricht, die die IP-Adresse, die mit der entfernten MAC-Zieladresse verknüpft ist, beinhaltet
Kapseln des ersten Datenpakets, das Schicht-3- und Schicht-2-Header beinhaltet, in einem zweiten Datenpaket;
Auswählen einer Anbieterschnittstelle auf Basis der IP-Zieladresse, bei der es sich entweder um die IP-Zieladresse des ersten des ersten Datenpakets, wenn das erste Datenpaket eine IP-Zieladresse aufweist, oder die IP-Zieladresse, die in der ARP-Antwortnachricht enthalten ist, handelt; und
Übertragen des gekapselten zweiten Datenpakets zur ausgewählten Anbieterschnittstelle.

2. Verfahren nach Anspruch 1, wobei die ARP-Antwortnachricht vom Zielnetzwerkknoten empfangen wird.

3. Verfahren nach Anspruch 1, wobei die ARP-Antwortnachricht von einem ersten ARP-Anforderungshandler empfangen wird.

4. Verfahren nach Anspruch 3, wobei der erste ARP-Antworthandler die ARP-Antwortnachricht von einem zweiten ARP-Antworthandler empfängt.

5. Verfahren nach Anspruch 1, wobei die ARP-Anforderungsnachricht an einen ersten ARP-Antworthandler gesendet wird, der die ARP-Anforderungsnachricht an einen zweiten ARP-Antworthandler rundsendet.

6. Verfahren nach Anspruch 1, wobei die ARP-Anforderungsnachricht an einen ersten ARP-Antworthandler gesendet wird, der die ARP-Anforderungsnachricht zu einem zentralisierten Auflösungssystem überträgt, und der erste ARP-Antworthandler die ARP-Antwortnachricht vom zentralisierten Auflösungssystem empfängt.

7. Verfahren nach Anspruch nach einem der Ansprüche 1 bis 6, wobei die ausgewählte(n) Anbieterschnittstelle(n) mit einem Schicht-3-VPN verbunden ist (sind).

8. Anbieterrandnetzwerkknoten, der mit einem virtuellen privaten Netzwerk, VPN, verbunden ist und Folgendes umfasst:
eine Speichervorrichtung und
einen Prozessor, der mit der Speichervorrichtung in Kommunikation steht, wobei der Prozessor zu Folgendem ausgelegt ist:
Empfangen eines ersten Datenpakets von einem Kundenrandnetzwerkknoten, das Schicht-2-Headerinformationen beinhaltet, die eine entfernte MAC-Zieladresse und eine MAC-Quelladresse beinhalten;
Bestimmen, dass der Anbieterrandnetzwerkknoten eine Adressauflösungsprotokoll(ARP)-Anforderungsnachricht empfangen hat;
Auswählen von mehreren Anbieterschnittstellen, die zum VPN gehören, wenn das erste Datenpaket keine IP-Zieladresse aufweist;
Rundsenden der ARP-Anforderungsnachricht, um die IP-Zieladresse, die mit der entfernten MAC-Zieladresse verknüpft ist, anzufordern;
Empfangen einer ARP-Antwortnachricht, die die IP-Adresse, die mit der entfernten MAC-Zieladresse verknüpft ist, beinhaltet;
Kapseln des ersten Datenpakets, das Schicht-3- und Schicht-2-Header beinhaltet, in einem zweiten Datenpaket;
Auswählen einer Anbieterschnittstelle auf Basis der IP-Zieladresse, bei der es sich entweder um die IP-Zieladresse des ersten Datenpakets, wenn das erste Datenpaket eine IP-Zieladresse aufweist, oder die IP-Zieladresse, die in der ARP-Antwortnachricht enthalten ist, handelt; und
Übertragen des gekapselten zweiten Datenpakets zur ausgewählten Anbieterschnittstelle.

9. Anbieterrandnetzwerkknoten nach Anspruch 8, wobei die ARP-Antwortnachricht vom Zielnetzwerkknoten empfangen wird.

10. Anbieterrandnetzwerkknoten nach Anspruch 8, wobei die ARP-Antwortnachricht von einem ersten ARP-Anforderungshandler empfangen wird.

11. Anbieterrandnetzwerkknoten nach Anspruch 10, wobei der erste ARP-Antworthandler die ARP-Antwortnachricht von einem zweiten ARP-Antworthandler empfängt.

12. Anbieterrandnetzwerkknoten nach Anspruch 8, wobei die ARP-Anforderungsnachricht an einen ersten ARP-Antworthandler gesendet wird, der die ARP-Anforderungsnachricht an einen zweiten ARP-Antworthandler rundsendet.

13. Anbieterrandnetzwerkknoten nach Anspruch 8, wobei die ARP-Anforderungsnachricht an einen ersten ARP-Antworthandler gesendet wird, der die ARP-Anforderungsnachricht zu einem zentralisierten Auflösungssystem überträgt, und der erste ARP-Antworthandler die ARP-Antwortnachricht vom zentralisierten Auflösungssystem empfängt.

14. Anbieterrandnetzwerkknoten nach Anspruch nach einem der Ansprüche 9 bis 13, wobei die ausgewählte(n) Anbieterschnittstelle(n) mit einem Schicht-3-VPN verbunden ist (sind).

## Revendications

1. Procédé de mise en œuvre d'un réseau privé virtuel, VPN, au niveau d'un nœud de réseau périphérique de fournisseur, comprenant les étapes suivantes :
recevoir un premier paquet de données à partir d'un nœud de réseau périphérique de consommateur qui comporte des informations d'en-tête de couche 2 comportant une adresse de commande d'accès au support, MAC, de destination distante et une adresse MAC de source ;
déterminer que le nœud de réseau périphérique de fournisseur a reçu un message de demande de protocole de résolution d'adresse, ARP ;
sélectionner de multiples interfaces de fournisseurs qui appartiennent au VPN, lorsque le premier paquet de données n'a pas d'adresse de protocole Internet, IP, de destination ;
diffuser le message de demande ARP demandant une adresse IP de destination associée à l'adresse MAC de destination distante ;
recevoir un message de réponse ARP comportant l'adresse IP associée à l'adresse MAC de destination distante
encapsuler le premier paquet de données, comportant des en-têtes de couche 3 et de couche 2 dans un deuxième paquet de données ;
sélectionner une interface de fournisseur sur la base de l'adresse IP de destination, qui est soit l'adresse IP de destination du premier du premier paquet de données lorsque le premier paquet de données a une adresse IP de destination, soit l'adresse IP de destination contenue dans le message de réponse ARP ; et
transmettre le deuxième paquet de données encapsulé à l'interface de fournisseur sélectionnée.

2. Procédé selon la revendication 1, dans lequel le message de réponse ARP est reçu à partir du nœud de réseau de destination.

3. Procédé selon la revendication 1, dans lequel le message de réponse ARP est reçu à partir d'un premier gestionnaire de demande ARP.

4. Procédé selon la revendication 3, dans lequel le premier gestionnaire de réponse ARP reçoit le message de réponse ARP à partir d'un deuxième gestionnaire de réponse ARP.

5. Procédé selon la revendication 1, dans lequel le message de demande ARP est envoyé à un premier gestionnaire de réponse ARP qui diffuse le message de demande ARP à un deuxième gestionnaire de réponse ARP.

6. Procédé selon la revendication 1, dans lequel le message de demande ARP est envoyé à un premier gestionnaire de réponse ARP qui transmet le message de demande ARP à un système de résolution centralisé, et le premier gestionnaire de réponse ARP reçoit le message de réponse ARP à partir du système de résolution centralisé.

7. Procédé selon l'une quelconque des revendications 1 à 6, dans lequel la ou les interfaces de fournisseur sélectionnées se connectent à un VPN de couche 3.

8. Nœud de réseau périphérique de fournisseur connecté à un réseau privé virtuel, VPN, comprenant :
un dispositif de mémoire ; et
un processeur en communication avec le dispositif de mémoire, le processeur étant configuré pour :
recevoir un premier paquet de données à partir d'un nœud de réseau périphérique de consommateur qui comporte des informations d'en-tête de couche 2 comportant une adresse MAC de destination distante et une adresse MAC de source ;
déterminer que le nœud de réseau périphérique de fournisseur a reçu un message de demande de protocole de résolution d'adresse, ARP ;
sélectionner de multiples interfaces de fournisseurs qui appartiennent au VPN, lorsque le premier paquet de données n'a pas d'adresse IP de destination ;
diffuser le message de demande ARP demandant l'adresse IP de destination associée à l'adresse MAC de destination distante ;
recevoir un message de réponse ARP comportant l'adresse IP associée à l'adresse MAC de destination distante ;
encapsuler le premier paquet de données, comportant les en-têtes de couche 3 et de couche 2 dans un deuxième paquet de données ;
sélectionner une interface de fournisseur sur la base de l'adresse IP de destination, qui est soit l'adresse IP de destination du premier paquet de données lorsque le premier paquet de données a une adresse IP de destination, soit l'adresse IP de destination contenue dans le message de réponse ARP ; et
transmettre le deuxième paquet de données encapsulé à l'interface de fournisseur sélectionnée.

9. Nœud de réseau périphérique de fournisseur selon la revendication 8, dans lequel le message de réponse ARP est reçu à partir du nœud de réseau de destination.

10. Nœud de réseau périphérique de fournisseur selon la revendication 8, dans lequel le message de réponse ARP est reçu à partir d'un premier gestionnaire de demande ARP.

11. Nœud de réseau périphérique de fournisseur selon la revendication 10, dans lequel le premier gestionnaire de réponse ARP reçoit le message de réponse ARP à partir d'un deuxième gestionnaire de réponse ARP.

12. Nœud de réseau périphérique de fournisseur selon la revendication 8, dans lequel le message de demande ARP est envoyé à un premier gestionnaire de réponse ARP qui diffuse le message de demande ARP à un deuxième gestionnaire de réponse ARP.

13. Nœud de réseau périphérique de fournisseur selon la revendication 8, dans lequel le message de demande ARP est envoyé à un premier gestionnaire de réponse ARP qui transmet le message de demande ARP à un système de résolution centralisé, et le premier gestionnaire de réponse ARP reçoit le message de réponse ARP à partir du système de résolution centralisé.

14. Nœud de réseau périphérique de fournisseur selon l'une quelconque des revendications 9 à 13, dans lequel la ou les interfaces de fournisseur sélectionnées se connectent à un VPN de couche 3.
